# EUROPEAN PATENT SPECIFICATION

(11) **EP 2 228 184 B1**
(45) Date of publication and mention of the grant of the patent: **14.11.2012**
(21) Application number: 10155954.0
(22) Date of filing: 09.03.2010
(51) Int. Cl.: B27B 5/22, B23D 47/02

(54) **Workpiece supporting apparatus**
Werkstückauflage
Porte-pièce

(30) Priority: 11.03.2009 IT MO20090053
(43) Date of publication of application: 15.09.2010
(73) Proprietor: SCM Group S.p.A., 47921 Rimini (RN) (IT)
(72) Inventor: Pazzini, Ivano, 47863 Novafeltria (PU) (IT)
(74) Representative: Cicconetti, Andrea

(56) References cited:
- EP-A- 1 205 285
- DE-U1- 20 108 153

## Description

The present invention relates to supporting apparatuses for machine tools used in the woodworking industry to machine piece of wood or similar materials. In particular, the invention refers to a supporting apparatus for a circular saw machine for panels, also defined as a squaring machine. The aforesaid supporting apparatus enables the panels to be cut to be correctly positioned and oriented, and enables tilted cuts to be made precisely and reliably, ensuring an optimal support to the panel being machined.

Supporting apparatuses are known that are associable with the sawing machines to perform tilted cuts on the workpieces. The preamble of claim 1 is based on EP-A-1205285.

Such apparatuses comprise frames that are fixed to a slidable slide of the machine, that are univocally arranged orthogonally to the cutting direction and are provided with a rule that is tiltable according to cutting needs (normally ±45°/50° with respect to a direction that is orthogonal to the slidable slide).

Such apparatuses have the drawback of providing limited support to the workpiece, especially in the case of large tilt angles of the rule.

Apparatuses are further known comprising a frame fixed to the slidable slide of the machine, with the possibility of rigid rotation around a single fulcrum, such as to be tiltable with respect to the aforesaid slide according to cutting needs (normally ±45°/50° with respect to a direction that is orthogonal to the slide).

Such apparatuses nevertheless have a very complex structure that entails high production costs.

Supporting apparatuses are further known that are provided with frames fixed to the slidable slide of the machine that have a "parallelogram" structure and are thus tiltable in relation to the slide according to cutting needs (normally ±45°/50° with respect to a direction that is orthogonal to the slidable slide).

The parallelogram frame, the sides or rods of which are tiltable with respect to the movable slide, is supported by a supporting element that is extendible in a telescopic manner, commonly known as a 'flag'. This constructional solution is a compromise between the two previously mentioned solutions, both from the functional point of view (ensures greater support of the panel with respect to the solution with a frame that is fixed to the slide, but less than the solution with a frame hinged on the slide), and from the point of view of industrial costs (the manufacturing complexity is greater than the first solution and less than the second solution).

As the support provided by the flag for the parallelogram is provided at a significant distance from the fulcrums of the rods of the parallelogram hinged on the slide, in some operating configurations of the frame it is necessary, in order to sustain the frame adequately, for the flag to comprise a telescopic part provided with a significant stroke. Therefore in these cases it is necessary to get a special flag with an increased stroke that allows a shortening or a lengthening with respect to the conditions of the standard frames. These increased strokes can be obtained, for example, with a flag provided with a series of two telescopic elements instead of one.

Such a solution obviously entails an increase in production costs, due to greater constructional complexity and to the greater number of components used, and less flexional stiffness of the device, due to the presence of a greater number of elements that are relatively connected together, and to greater elongations.

The object of the present invention is to improve supporting apparatuses that are associable with machine tools, in particular sawing machines, for supporting and orienting workpieces made of wood and similar materials.

Another object is to make a supporting apparatus provided with an articulated quadrilateral frame that can be suitably supported in all operating configurations by an extendible supporting element, or flag, of standard type.

A further object is to obtain a supporting apparatus having a robust and reliable structure that is at the same time simple and cheap to make.

According to the invention a supporting apparatus is provided that is associable with a tool machine according to claim 1.

The apparatus comprises an articulated quadrilateral frame (in particular a four bar linkage), a member of which (known as the "head") is fixed to the slidable slide or is represented by said slide, and in which two rods are hinged on the head. The apparatus further provides a further supporting element that is rotatably fixed to each of the two rods of the articulated quadrilateral, where the further supporting element is then arranged resting on an extendible supporting element (flag) fixed to a base of the machine.

The presence of the further supporting element and the modes illustrated below according to what the further supporting element is in a relation with the remaining parts define the invention, enabling the strokes of the extendible supporting element to be reduced and the support of the parallelogram frame to be improved.

The invention can be better understood and implemented with reference to the attached drawings that illustrate some embodiments thereof by way of non-limiting example, in which:
Figure 1 is a plan view of the supporting apparatus of the invention associated with a machine tool arranged in a first operating position, in which a frame is tilted to 0° with respect to an axis that is orthogonal to a cutting direction to make right-angle cuts;
Figure 2 is a view like that in Figure 1, illustrating the apparatus in a second operating position, in which the frame is tilted by -50° to make tilted cuts;
Figure 3 is a view like that in Figure 1, illustrating the apparatus in a third operating position, in which the frame is tilted by +50° to make further tilted cuts.

A description of a preferred but non-limiting embodiment of the invention follows.

The machine tool 50, in particular a squaring machine for wooden panels, comprises a slide 51 that is slidable along a horizontal cutting direction T along a work surface 54 and an extendible supporting element 5, known as a flag.

A frame 2 of the articulated parallelogram type, provided with two rod elements 3, 4 arranged parallel, is connected to the slide 51 by a respective head element, known simply as a head. Each rod element 3, 4 is rotatably connected to the head element or to the slide 51, so as to be able to perform rotational movements on a substantially horizontal table. A further rod element 52 is rotatably connected to the respective ends of the two rod elements 3, 4, acting as a closing connecting rod of the articulated parallelogram.

The parallelogram frame 2 is indirectly supported by an end 5a of the extendible supporting element 5. In fact, between the end 5a of the extendible supporting element 5 and the parallelogram frame 2 there is interposed a further supporting element 6, that thus acts as an intermediate element.

This further supporting element 6 is made as a rigid rectangular perimeter that is defined by rods (sides or portions thereof).

The further supporting element 6 comprises a first portion 7 that connects the two rod elements 3, 4 and a second portion 8 that connects the end 5a of the extendible supporting element 5 to said first portion 7.

The first portion 7 is positioned near the slide 51 so as to reduce the linear movements of said further supporting element 6 caused by angular movements of said rod elements 3, 4.

The first portion 7 is fixed to the rod elements 3, 4 and is rotatable around respective axes Z1, Z2 that are parallel to one another and substantially perpendicular to the work surface 54.

The axes Z1, Z2 are contained on a plane that is perpendicular to the work surface 54 and substantially parallel to said cutting direction T.

The further supporting element 6 further comprises a third portion 9 fixed to the second portion 8 and provided with hooking means 12 for fixing the end 5a to said further supporting element 6 in a plurality of operating positions. In particular, the hooking means 12 comprises three different elements for anchoring the further supporting element 6 on the extendible supporting element. The hooking means 12 enables the cutting strokes on the machine to be maximised.

The further supporting element 6 further comprises a fourth portion 10 for connecting the first portion 7 to the third portion 9.

The aforesaid portions 7, 8, 9, 10 may comprise respective elongated members, in particular rods defining a rectangle. In this case, diagonal rods for structural stiffening are also present.

The method for connecting the further supporting element 6 to said articulated parallelogram frame 2 provides for the first portion 7 being rotatably connected (at each end thereof) respectively with each of the rod elements 3, 4 of the frame 2, such that said first portion 7 is defined by the rod elements 3, 4, for a length that is equal to the length of the further rod element 52. Further, as mentioned above, this connection provides for the first portion 7 being arranged substantially near the slide 51.

In this manner, as the configurations of the parallelogram frame 2 vary, the first portion 7 always remains parallel to the further rod element 52, or to the slide 51 and to the cutting direction T, and the linear movements of the further supporting element 6 - which, connected in this manner, simply translates - are substantially very reduced, also in relation to considerable angular travels performed by the rod elements 3,4.

The end 5a of the extendible supporting element 5 supports, by a spherical joint, the further supporting element 6 at a point of the third portion 9 thereof, and the further supporting element 6 then supports the parallelogram frame 2. The supporting action is better obtainable if the aforesaid rotatable connections between the first portion 7 and the rod elements 3,4 define rotation axes Z1 and Z2 that in the mutual connection of the parts are provided for being able to remain vertical in a rigid manner.

The extendible supporting element 5 comprises a telescopic element, fixed by the spherical joint to the further supporting element (6) and by a rotatable cantilever joint to the base 53 of the machine tool 50.

The apparatus of the invention enables the travels of the extendible supporting element 5 to be minimised, enabling an extendible element, or flag, of standard type to be used and the slide strokes to be maximised at the same time.

Further, on the further supporting element (6) supporting means 11 is provided, comprising in particular a plate on which slides, during rotation, the parallelogram frame 2, with the function of maximising the overall stiffness of the system by decreasing overall deflection originating from the thrust of the panel being machined.

The parallelogram frame 2 is provided with a device for fine-adjusting the tilt, with a system for displaying the angular dimension and with a system for locking the parallelogram frame in position once the desired angular dimension has been reached.

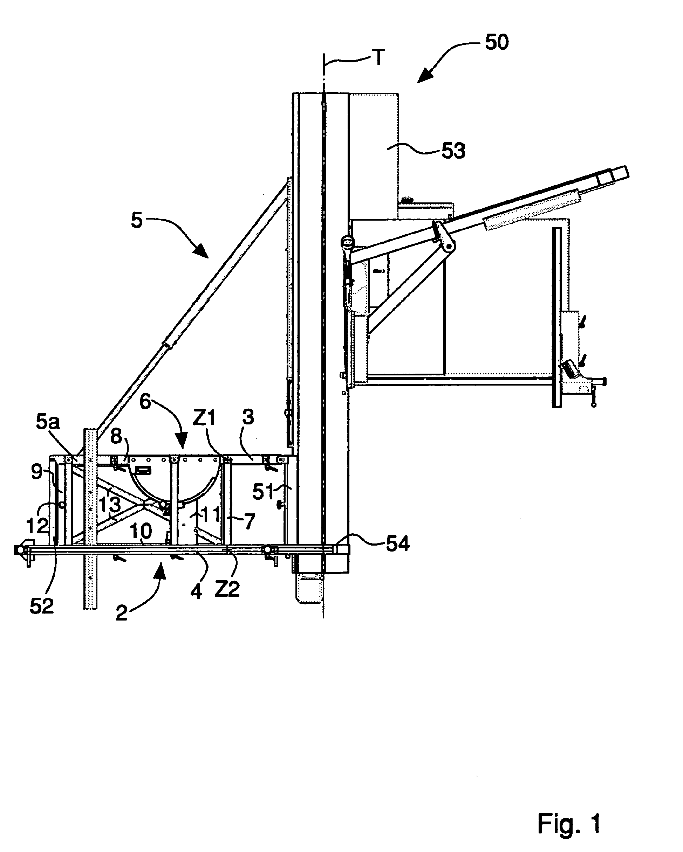

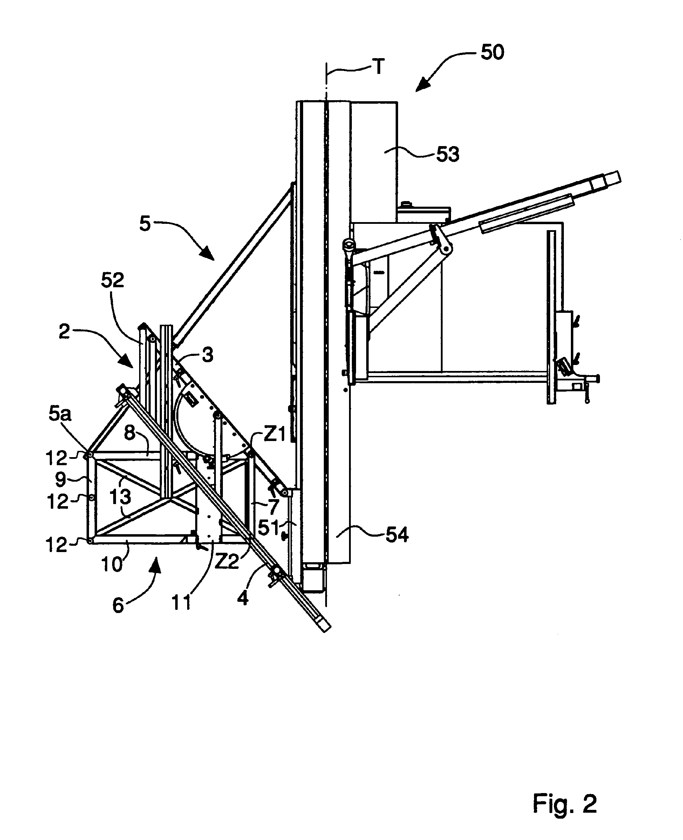

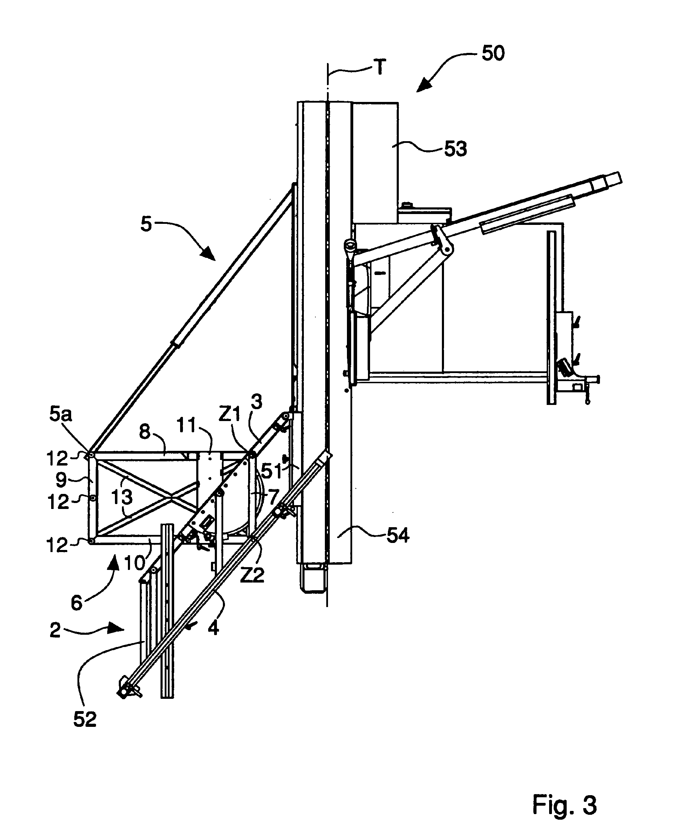

The supporting apparatus of the invention can thus be used to make:
- right-angle cuts: the frame 2 is maintained with the rods (3,4) orthogonal to the slidable slide (Figure 1;
- tilted cuts: the frame 2 is oriented at the desired angular dimension and locked in position (Figures 2 and 3).

## Claims

1. Supporting apparatus associable with a machine tool (50), in particular a circular saw machine, for supporting a workpiece made of wood or similar material, comprising:
- a frame (2) of the articulated quadrilateral type including two rod elements (3, 4), that are rotatably connected to a slide (51) of said machine tool (50) that is movable along a cutting direction (T), and a connecting-rod element (52) opposite said slide (51) and connecting said rod elements (3, 4), and
- extendible supporting means (5) connected to said machine tool (50) for supporting said frame (2),
**characterised in that** said supporting apparatus comprises a further supporting element (6) interposed between said frame (2) and said extendible supporting means (5), said further supporting element (6) being rotatably connected to each of said two rod elements (3, 4) and to an end (5a) of said extendible supporting means (5).

2. Apparatus according to claim 1, wherein said frame (2) is a four bar linkage.

3. Apparatus according to claim 1 or 2, wherein said further supporting element (6) comprises at least a first portion (7) that connects said two rod elements (3, 4) and a second portion (8) that connects said end (5a) of said extendible supporting element (5) to said first portion (7).

4. Apparatus according to claim 3, wherein said first portion (7) is positioned near said slide (51) so as to reduce the linear movements of said further supporting element (6) arising from angular movements of said rod elements (3, 4).

5. Apparatus according to claim 3 or 4, wherein said first portion (7) is fixed to said rod elements (3, 4) rotatable around respective axes (Z1, Z2) that are parallel to one another and substantially perpendicular to a working surface (54) of said machine tool (50).

6. Apparatus according to claim 5, wherein said axes (Z1, Z2) are contained on a plane that is perpendicular to said working surface (54) and substantially parallel to said cutting direction (T).

7. Apparatus according to any one of claims 3 to 6, wherein said further supporting element (6) comprises a third portion (9) fixed to said second portion (8) and provided with hooking means (12) for fixing said end (5a) to said further supporting element (6) in a plurality of operating positions.

8. Apparatus according to claim 7, wherein said further supporting element (6) comprises a fourth portion (10) for connecting said first portion (7) to said third portion (9).

9. Apparatus according to claim 8, wherein said portions (7, 8, 9, 10) comprise respective elongated members, in particular rods defining a rectangle.

10. Apparatus according to any preceding claim, comprising supporting means (11), fixed to said further supporting element (6) for slidably supporting at least a part of said frame (2).

11. Apparatus according to any preceding claim, wherein said extendible supporting element (5) comprises a telescopic element fixed by a spherical joint to said further supporting element (6) and by a rotatable cantilever joint to a base (53) of said machine tool (50).

## Patentansprüche

1. Stützvorrichtung, die mit einer Werkzeugmaschine (50) verbindbar ist, insbesondere einer Kreissägenmaschine, zum Stützen eines Werkstücks, das aus Holz oder einem ähnlichen Material gemacht ist, umfassend:
- einen Rahmen (2) der gegliederten, vierseitigen Art umfassend zwei Stabelemente (3, 4), die drehbar mit einem Schlitten (51) der Werkzeugmaschine (50) verbunden sind, der entlang einer Schneidrichtung (T) beweglich ist, und ein Verbindungsstabelement (52), das entgegengesetzt zu dem Schlitten (51) angeordnet ist und das die Stabelemente (3, 4) verbindet, und
- ein ausziehbares Stützmittel (5), das mit der Werkzeugmaschine (50) zum Stützen des Rahmens (2) verbunden ist,
**dadurch gekennzeichnet, dass** die Stützvorrichtung ein weiteres Stützelement (6) umfasst, das zwischen dem Rahmen (2) und dem ausziehbaren Stützmittel (5) angeordnet ist, wobei das weitere Stützelement (6) drehbar mit jedem der zwei Stabelemente (3, 4) und mit einem Ende (5a) des ausziehbaren Stützmittels (5) verbunden ist.

2. Vorrichtung nach Anspruch 1, bei welcher der Rahmen (2) ein vierstängiges Gestänge ist.

3. Vorrichtung nach einem der Ansprüche 1 oder 2, bei welcher das weitere Stützelement (6) wenigstens einen ersten Teil (7) umfasst, der die zwei Stabelemente (3, 4) verbindet, und einen zweiten Teil (8) umfasst, der das Ende (5a) des ausziehbaren Stützelements (5) mit dem ersten Teil (7) verbindet.

4. Vorrichtung nach Anspruch 3, bei welcher der erste Teil (7) nahe dem Schlitten (51) angeordnet ist, so dass er die linearen Bewegungen des weiteren Stützelements (6) reduziert, die aus Winkelbewegungen der Stabelemente (3, 4) herrühren.

5. Vorrichtung nach einem der Ansprüche 3 oder 4, bei welcher der erste Teil (7) an den Stabelementen (3, 4) drehbar um die jeweiligen Achsen (Z1, Z2) befestigt ist, die parallel zueinander und im Wesentlichen rechtwinklig zu einer Arbeitsoberfläche (54) der Werkzeugmaschine (50) sind.

6. Vorrichtung nach Anspruch 5, bei welcher die Achsen (Z1, Z2) in einer Ebene enthalten sind, die rechtwinklig zu der Arbeitsoberfläche (54) und im Wesentlichen parallel zu der Schneidrichtung (T) ist.

7. Vorrichtung nach einem der Ansprüche 3 bis 6, bei welcher das weitere Stützelement (6) einen dritten Teil (9) umfasst, der an dem zweiten Teil (8) befestigt ist, und mit einem Hakenmittel (12) ausgestattet ist, um das Ende (5a) an dem weiteren Stützelement (6) in mehreren Betriebspositionen zu befestigen.

8. Vorrichtung nach Anspruch 7, bei welcher das weitere Stützelement (6) einen vierten Teil (10) zum Verbinden des ersten Teils (7) mit dem dritten Teil (9) umfasst.

9. Vorrichtung nach Anspruch 8, bei welcher die Teile (7, 8, 9, 10) jeweils langgestreckte Elemente umfassen, insbesondere Stäbe, die ein Rechteck definieren.

10. Vorrichtung nach einem der vorstehenden Ansprüche, umfassend ein Stützmittel (11), das an dem weiteren Stützelement (6) zum gleitfähigen Stützen wenigstens eines Teils des Rahmens (2) befestigt ist.

11. Vorrichtung nach einem der vorstehenden Ansprüche, bei welcher das ausziehbare Stützelement (5) ein teleskopisches Element umfasst, das durch ein Kugelgelenk an dem weiteren Stützelement (6) und durch ein drehbares Auslegergelenk an einer Basis (53) der Werkzeugmaschine (50) befestigt ist.

## Revendications

1. Dispositif de support associable à une machine-outil (50), en particulier à une machine à scie circulaire, pour supporter une pièce à façonner faite de bois ou d'un matériau similaire, comprenant :
- un cadre (2) du type à quadrilatère articulé comprenant deux éléments de tige (3, 4), qui sont reliés de manière rotative à un coulisseau (51) de ladite machine-outil (50) qui est mobile le long d'une direction de coupe (T), et un élément de tige de liaison (52) opposé audit coulisseau (51) et reliant lesdits éléments à tige (3, 4), et
- des moyens de support extensibles (5) reliés à ladite machine-outil (50) pour supporter ledit cadre (2),
***caractérisé en ce que*** ledit dispositif de support comprend un élément de support supplémentaire (6) interposé entre ledit cadre (2) et lesdits moyens de support extensibles (5), ledit élément de support supplémentaire (6) étant relié de manière rotative à chacun desdits deux éléments de tige (3, 4) et à une extrémité (5a) desdits moyens de support extensible (5).

2. Dispositif selon la revendication 1, dans lequel ledit cadre (2) est un parallélogramme articulé.

3. Dispositif selon la revendication 1 ou 2, dans lequel ledit élément de support supplémentaire (6) comprend au moins une première portion (7) qui relie lesdits deux éléments de tige (3, 4) et une deuxième portion (8) qui relie ladite extrémité (5a) dudit élément de support extensible (5) à ladite première portion (7).

4. Dispositif selon la revendication 3, dans lequel ladite première portion (7) est positionnée à proximité dudit coulisseau (51) afin de réduire les déplacements linéaires dudit élément de support supplémentaire (6) produits par les déplacements angulaires desdits éléments de tige (3, 4).

5. Dispositif selon la revendication 3 ou 4, dans lequel ladite première portion (7) est fixée auxdits éléments de tige (3, 4) de manière rotative autour d'axes respectifs (Z1, Z2) qui sont parallèles l'un à l'autre et sensiblement perpendiculaires à une surface de travail (54) de ladite machine-outil (50).

6. Dispositif selon la revendication 5, dans lequel lesdits axes (Z1, Z2) sont contenus dans un plan qui est perpendiculaire à ladite surface de travail (54) et sensiblement parallèle à ladite direction de coupe (T).

7. Dispositif selon l'une quelconque des revendications 3 à 6, dans lequel ledit élément de support supplémentaire (6) comprend une troisième portion (9) fixée à ladite deuxième portion (8) et pourvue de moyens d'ancrage (12) pour fixer ladite extrémité (5a) audit élément de support supplémentaire (6) dans une pluralité de positions opérationnelles.

8. Dispositif selon la revendication 7, dans lequel ledit élément de support supplémentaire (6) comprend une quatrième portion (10) pour relier ladite première portion (7) à ladite troisième portion (9).

9. Dispositif selon la revendication 8, dans lequel lesdites portions (7, 8, 9, 10) comprennent des éléments allongés respectifs, en particulier des tiges définissant un rectangle.

10. Dispositif selon l'une quelconque des revendications précédentes, comprenant des moyens de support (11), fixés audit élément de support supplémentaire (6) pour supporter de manière coulissante une partie au moins dudit cadre (2).

11. Dispositif selon l'une quelconque des revendications précédentes, dans lequel ledit élément de support extensible (5) comprend un élément télescopique fixé par un joint sphérique audit élément de support supplémentaire (6) et, par une articulation rotative en porte-à-faux, à une base (53) de ladite machine-outil (50).
